# EUROPÄISCHE PATENTSCHRIFT

(11) **EP 0 446 417 B1**
(45) Veröffentlichungstag und Bekanntmachung des Hinweises auf die Patenterteilung: **23.08.1995**
(21) Anmeldenummer: 90120461.0
(22) Anmeldetag: 25.10.1990
(51) Int. Cl.: G01F 23/24, G06F 15/02

(54) **Anordnung zur Messung einer Flüssigkeitsmenge**
Liquid quantity measuring system
Dispositif de mesure de la quantité d'un liquide

(30) Priorität: 14.03.1990 DE 4008031
(43) Veröffentlichungstag der Anmeldung: 18.09.1991
(73) Patentinhaber: VDO Adolf Schindling AG, D-60487 Frankfurt (DE)
(72) Erfinder: Kotulla, Günther, W-6231 Sulzbach/Ts. (DE)
(74) Vertreter: Klein, Thomas, Dipl.-Ing. (FH)

(56) Entgegenhaltungen:
- EP-A- 0 288 215
- EP-B- 0 141 468
- DE-A- 2 555 893
- DE-A- 2 849 066
- DE-A- 2 946 585
- DE-A- 3 237 396
- DE-A- 3 308 180
- DE-A- 3 425 212
- DE-A- 3 601 100

## Beschreibung

Die Erfindung betrifft eine Anordnung zur Messung einer Flüssigkeitsmenge, insbesondere in einem Kraftstofftank eines Kraftfahrzeugs, mit einer Sonde und einer Auswerteschaltung, die einen Mikrocomputer enthält.

Zur möglichst genauen Messung des Kraftstoffvorrates in einem Tank eines Kraftfahrzeugs sind unter anderem elektro-thermische Füllstandsgeber bekanntgeworden. Bei diesen ist ein elektrischer Leiter mit temperaturabhängigem Widerstand je nach Füllstand verschieden weit mit Kraftstoff bedeckt. Über eine Konstantstromquelle wird in regelmäßigen Abständen ein Strom zugeführt, der einer Erwärmung des Leiters und damit auch eine Erhöhung des Widerstandes und des Spannungsabfalls bewirkt. Die Temperatur- und die Widerstandserhöhung sind an den mit Kraftstoff bedeckten Stellen des Leiters durch die kühlende Wirkung des Kraftstoffs geringer als oberhalb des Kraftstoffspiegels. Daher ist die Zunahme des Spannungsabfalls nach dem Einschalten des Sondenstroms vom Füllstand abhängig.

Bei derartigen Füllstandsgebern ist das Meßergebnis jedoch verschiedenen Einflüssen unterworfen. So sind beispielsweise Abweichungen durch fertigungsbedingte Toleranzen innerhalb der Auswerteschaltung oder bei der Sonde möglich. Zum Abschluß der Herstellung eines Füllstandsgebers ist daher ein Abgleich erforderlich, wobei eine bestimmte Auswerteschaltung bereits mit einer bestimmten Sonde zusammen abgeglichen wird.

Eine Anordnung gemäß Oberbegriff des Anspruchs 1 ist aus DE-A-3601100 bekannt.

Aufgabe der vorliegenden Erfindung ist es, eine Anordnung zur Messung einer Flüssigkeitsmenge derart auszubilden, daß ein Abgleich- und/oder Test an dem fertigen Füllstandsgeber in einfacher Weise durchgeführt werden kann.

Dazu ist erfindungsgemäß eine Anordnung gemäß Anspruch 1 vorgesehen. Zum Abgleich selbst ist insbesondere ein Code zur Durchführung eines Abgleichs vorgesehen, bei welchem ein Meßergebnis bei einem vorgegebenen Füllstand, vorzugsweise bei leerem Tank, mit einem Sollwert verglichen wird und ein Korrekturwert in einem nichtflüchtigen Speicher des Mikrocomputers abgelegt wird.

Dadurch ist ein Abgleich bei dem bereits vollständig gefertigten Füllstandsgeber möglich. Somit werden unter anderem Kosten eingespart, weil ein Abgleich des fertigen Füllstandsgebers eine geringere Ausschußquote zur Folge hat. Schließlich ist auch der Aufwand beim Abgleich geringer, so daß beispielsweise bei einem späteren Austausch der Sonde in einfacher Weise der gesamte Füllstandsgeber neu geeicht werden kann.

Für Testzwecke kann eine Feststellung des gespeicherten Korrekturwertes vorteilhaft sein. Deshalb ist gemäß einer anderen Weiterbildung ein Code zur Ausgabe des Korrekturwertes über einen Datenausgang des Mikrocomputers vorgesehen.

Bei Füllstandsgebern mit einem Mikrocomputer und einer Sonde wird im allgemeinen in einem nichtflüchtigen Speicher des Mikrocomputers eine Kennlinie abgelegt, welche den Zusammenhang zwischen der Flüssigkeitsmenge und dem Sondensignal für jeweils eine Sonde und eine Tankform wiedergibt.

Die erfindungsgemäße Anordnung zur Messung einer Flüssigkeitsmenge kann in einfacher Weise gemäß einer Weiterbildung an verschiedene Sonden oder Tankformen dadurch angepaßt werden, daß ein Code zum Eingeben und Speichern einer anderen Kennlinie vorgesehen ist.

Bei der erfindungsgemäßen Anordnung können ferner außer der Kennlinie noch andere Parameter verändert werden - beispielsweise die Dämpfung der Meßergebnisse, um trotz Schwappens des Kraftstoffs eine ruhige Anzeige zu erhalten.

Zur weiteren Verbesserung des Tests der erfindungsgemäßen Anordnung besteht eine andere Weiterbildung darin, daß ein Code zur Ausgabe eines Meßergebnisses bei einem vorgegebenen Sondensignal vorgesehen ist.

Eine andere Weiterbildung ist dadurch gekennzeichnet, daß in dem Mikrocomputer ein Fehlerdiagnoseregister vorgesehen ist, in welches Fehlermeldungen während des Betriebs der Anordnung eingeschrieben werden, und daß ein Code zur Ausgabe des Inhalts des Fehlerdiagnoseregisters zuführbar ist. Dadurch sind für eine Reparatur wertvolle Hinweise möglich.

Häufig ist bei Füllstandsgebern je ein Ausgang zur Ausgabe des Meßergebnisses als digitales Signal und als Analogsignal vorgesehen. An den Analog-Ausgang kann als Anzeigevorrichtung ein einfaches Drehspulmeßgerät angeschlossen werden. Der digitale Ausgang dagegen kann beispielsweise für eine digitale Anzeige, für einen Bordcomputer oder für Testzwecke verwendet werden. Eine Weiterbildung der Erfindung besteht nun darin, daß ein Code eingebbar ist, der die Ausgabe des Meßergebnisses für den vollen Tank unabhängig von der tatsächlichen Flüssigkeitsmenge bewirkt. Dadurch ist es möglich, bei einer erfindungsgemäßen Anordnung die Erzeugung des Analogsignals zu überwachen oder ein Anzeigeinstrument mit der erfindungsgemäßen Anordnung zusammen abzugleichen.

Für verschiedene Tests ist die Dämpfung der durch Schwappen der Flüssigkeit bedingten Änderungen der Sondenspannung störend. Gemäß einer anderen Weiterbildung ist daher ein Code vorgesehen, der eine ungedämpfte Ausgabe der Meßergebnisse bewirkt.

Bei elektrischen und elektronischen Baugruppen in einem Kraftfahrzeug ist man bemüht, die Zahl der Anschlüsse möglichst klein zu halten, um sowhl den Aufwand an Leitungen als auch die Zahl von Störungsquellen zu minimieren. Daher ist bei einer vorteilhaften Ausgestaltung der erfindungsgemäßen Anordnung vorgesehen, daß ein Anschluß der Auswerteschaltung sowohl mit einem Datenausgang als auch mit einem Dateneingang des Mikrocomputers verbunden ist. Vorzugsweise wird dabei vom Mikrocomputer der Dateneingang nur innerhalb einer vorgegebenen Zeit nach dem Einschalten abgefragt. Dadurch wird in einfacher Weise eine Fehlleitung von Daten vermieden.

Digitale Signale werden im Bordnetz eines Kraftfahrzeugs häufig mit einem Pegel von 12 V übertragen. Um den als Eingang und Ausgang dienenden Anschluß der Auswerteschaltung an den Eingang und den Ausgang des Mikrocomputers anzupassen, kann bei der erfindungsgemäßen Anordnung vorgesehen sein, daß zwischen dem Datenausgang des Mikrocomputers und dem Anschluß der Auswerteschaltung ein Transistor geschaltet ist und daß der Anschluß mit dem Dateneingang des Mikrocomputers über einen Spannungsteiler verbunden ist.

Eine vorteilhafte Abgleich- und/oder Testeinrichtung für eine erfindungsgemäße Anordnung ist dadurch gekennzeichnet, daß ein weiterer Mikrocomputer mit einer Anzeigevorrichtung, einer Eingabevorrichtung und einem bidirektionalen Treiber zur Verbindung mit der Auswerteschaltung versehen ist.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild einer erfindungsgemäßen Anordnung, die mit einer Abgleich- und Testeinrichtung verbunden ist und
- Fig. 2: als Flußdiagramm ein für den Mikrocomputer in der Anordnung nach Fig. 1 vorgesehenes Programm.

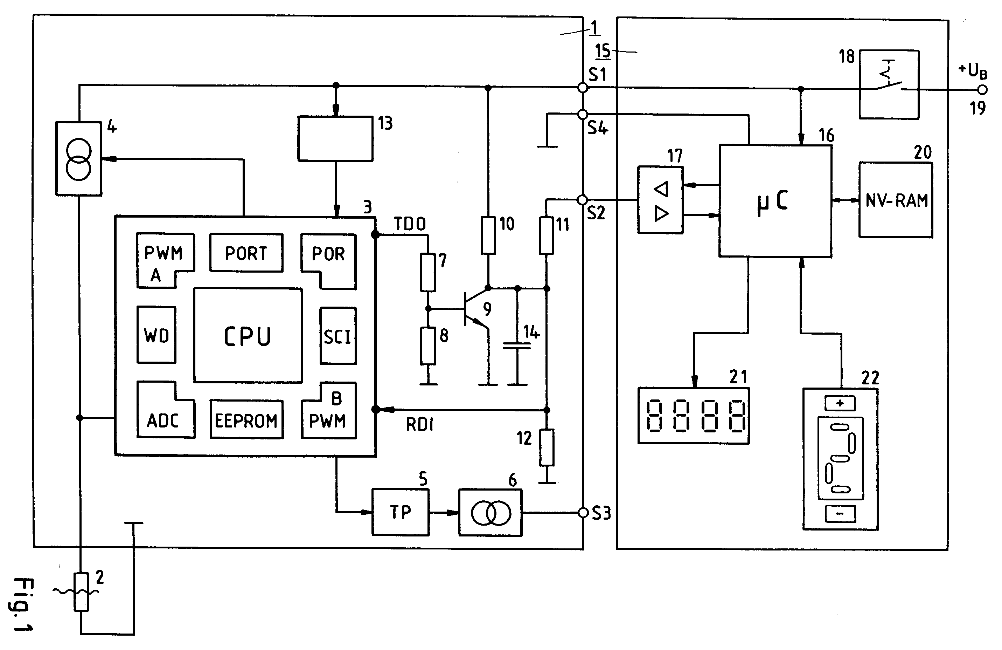

Der in Fig. 1 dargestellte Füllstandsgeber besteht aus einer Auswerteschaltung 1 und einer Sonde, die im wesentlichen aus einem temperaturabhängigem Widerstand 2 besteht, der sich über die gesamte Füllhöhe des nicht dargestellten Kraftstofftanks erstreckt. Die Auswerteschaltung 1 umfaßt einen Mikrocomputer 3, der bei dem dargestellten Ausführungsbeispiel als Ein-Chip-Mikrocomputer vom Typ 68 HC 05 B6 ausgeführt ist, und in an sich bekannter Weise außer der zentralen Verarbeitungseinheit CPU verschiedene Einheiten umfaßt, von denen der Analog/Digital-Wandler ADC, der nichtflüchtige Speicher EEPROM und ein Pulsbreitenmodulator PWM B, ein serieller Ausgang TDO und ein serieller Eingang RDI zur Erläuterung der Erfindung von Bedeutung sind. Der Mikrocomputer wird mit Hilfe einer Stabilisierungsschaltung 13 mit einer Betriebsspannung von 5 V versorgt.

Gesteuert vom Mikrocomputer 3 wird in regelmäßigen Zeitabständen eine Konstantstromquelle 4 eingeschaltet, welche den Widerstand 2 in der Sonde mit einem konstanten Strom beaufschlagt. Der Spannungsabfall am Widerstand 2 wird über den Analog/Digital-Wandler ADC in ein digitales Signal umgewandelt und in der zentralen Verarbeitungseinheit CPU ausgewertet. Nach dem plötzlichen Spannungsanstieg durch das Einschalten des Stroms erfolgt eine Erwärmung des Widerstandes 2, was wiederum einen weiteren Spannungsanstieg zur Folge hat. Dieser Spannungsanstieg ist jedoch vom Füllstand abhängig, da der vom Kraftstoff bedeckte Teil des Widerstands 2 sich nicht in dem Maße erwärmt wie der Teil oberhalb des Kraftstoffs.

Bei der Auswertung des Spannungsanstiegs werden verschiedene Parameter, der Wert des Widerstandes 2, der Temperaturkoeffizient und die Form des Kraftstofftanks berücksichtigt. Dazu sind diese Parameter in Form einer Kennlinie im EEPROM abgelegt. Außerdem werden bei der Ermittlung des Meßergebnisses aus dem Spannungsanstieg Exemplarstreuungen der Auswerteschaltung und des Widerstandes 2 berücksichtigt, wozu nach einem Abgleichvorgang, der im einzelnen später beschrieben wird, ein entsprechender Korrekturwert im EEPROM abgelegt wird. Das Meßergebnis wird vom Mikrocomputer 3 über den Pulsbreitenmodulator PWM B und einen Tiefpaß 5 einer steuerbaren Stromquelle 6 zugeführt, deren Ausgang mit einem Anschluß S3 der Auswerteschaltung 1 verbunden ist. Eine Digital/Analog-Wandlung kann im Rahmen der Erfindung auch in anderer Weise erfolgen - beispielsweise mit Hilfe eines R-2R-Netzwerks und einem anschließenden Impedanzwandler.

Weitere Anschlüsse S1 und S4 dienen zur Verbindung mit dem Bordnetz. Ein Anschluß S2 ist zur Ausgabe des Meßergebnisses in digitaler Form vorgesehen. Um einen im Bordnetz des Kraftfahrzeugs üblichen Signalpegel von 12 V zu erreichen, werden die über den Ausgang TDO des Mikrocomputers 3 ausgegebenen digitalen Signale über einen Spannungsteiler 7, 8 der Basis eines Transistors 9 zugeführt, der als Schalttransistor betrieben wird und mit einem Arbeitswiderstand 10 an der Betriebsspannung liegt. Ein Kondensator 14 dient zur Unterdrückung von Störungen. Weitere Widerstände 11, 12 bilden einen Spannungsteiler zur Anpassung des Pegels von zugeführten digitalen Signalen an den Pegel von 5 V für den Eingang RDI des Mikrocomputers 3. Zum Schutz des Eingangs RDI kann dem Widerstand 12 eine Z-Diode mit einem Vorwiderstand parallelgeschaltet werden.

Beim normalen Betrieb innerhalb eines Kraftfahrzeugs dient der Anschluß S2 lediglich als Ausgang, um das Meßergebnis in digitaler Form einer digitalen Anzeigevorrichtung oder einem Reiserechner zuzuführen. Zum Abgleichen und Prüfen des Füllstandsgebers sind jedoch die Anschlüsse S1, S2 und S4 mit einer Abgleich- und Prüfeinrichtung 15 verbunden. Diese umfaßt einen Mikrocomputer 16, der über einen bidirektionalen Treiber 17 mit der seriellen Schnittstelle (Anschluß S2) der Auswerteschaltung 1 verbunden ist.

Der Anschluß S1 der Auswerteschaltung ist zusammen mit einem Anschluß zur Stromversorgung des Mikrocomputers 16 über einen Schalter 18 mit dem positiven Pol 19 einer Betriebsspannungsquelle verbunden. Entsprechend ist der Anschluß S4 der Auswerteschaltung 1 mit einem Masseanschluß der Abgleich- und Prüfeinrichtung 15 verbunden. An den Mikrocomputer 16 sind ein nichtflüchtiger Speicher 20, eine Anzeigevorrichtung 21 und als Eingabevorrichtung ein Codierschalter 22 angeschlossen. Mit dem Codierschalter 22 können verschiedene Betriebsarten gewählt werden.

Durch entsprechende Auslegung der Einschaltroutinen der Mikrocomputer 3, 16 wird gewährleistet, daß nach dem Einschalten während einer vorgegebenen Zeit der Mikrocomputer 3 noch keine Daten über den Ausgang TDO abgibt, jedoch am Eingang RDI anstehende Signale einliest. Während dieser Zeit gibt der Mikrocomputer 16 einen Code an den Mikrocomputer 3, was eine Aktivierung des normalen Meßprogramms des Mikrocomputers 3 verhindert. Bei dem dargestellten Ausführungsbeispiel sind mehrere verschiedene Codes vorgesehen, welche die im folgenden beschriebenen Betriebsarten aktivieren.

Ein Code C1 aktiviert einen Abgleich des Füllstandsgebers. Dieser erfolgt dadurch, daß der Spannungsanstieg mit der angeschlossenen Sonde, jedoch mit leerem Tank gemessen und in einen Füllstand umgerechnet wird. Entspricht dieser Wert nicht dem Sollwert für einen leeren Tank, so wird die Abweichung als Korrekturwert in den nichtflüchtigen Speicher EEPROM eingeschrieben und bei dem späteren Betrieb entsprechend berücksichtigt. Nach Ablauf des Abgleichvorgangs nimmt der Mikrocomputer 3 seinen normalen Meßbetrieb auf, wozu der Eingang RDI nicht mehr abgefragt wird und die Meßergebnisse über den Ausgang TDO als digitale Signale und über den Pulsbreitenmodulator PWM B als Analogsignale ausgegeben werden.

Bei Eingabe eines Codes C2 wird ein Programm zum Aufnehmen und Speichern von neuen Kennliniendaten aktiviert. Dieses kann beispielsweise erforderlich sein, wenn ein Füllstandsgeber einem anderen Tank zugeordnet werden soll als zunächst vorgesehen. Die neue Kennlinie wird dazu aus dem nichtflüchtigen Speicher 20 in den Mikrocomputer 3 übertragen.

Ein Code C3 bewirkt die Ausgabe des jeweils gespeicherten Korrekturwertes. Dieses kann für Reparaturen und Wartungsarbeiten von Interesse sein, um beispielsweise eine Alterung von Komponenten des Füllstandsgebers beurteilen zu können.

Zur Ausgabe eines Ergebnisses, das Folge einer vorgegebenen Eingangsspannung zur Auswerteschaltung ist, dient ein Code C4. Diese Betriebsart dient zur Überprüfung der Auswerteschaltung 6.

Im Falle von auftretenden Fehlern, beispielsweise kurzzeitige Ausfälle oder Leitungsunterbrechungen schreibt die CPU Fehlermeldungen in ein Fehlerdiagnoseregister. Der Inhalt dieses Registers kann mit einem Code C5 ausgelesen und beispielsweise zur Fehlersuche dienen.

Um ein an den Anschluß S3 angeschlossenes analog anzeigendes Instrument prüfen bzw. zusammen mit den entsprechenden Baugruppen der Auswerteschaltung 1 abgleichen zu können, kann mit Hilfe eines Codes C6 der Mikrocomputer 3 veranlaßt werden, einen Wert für einen vollen Tank zu erzeugen. Schließlich kann nach Eingabe eines Codes C7 das Meßergebnis ungedämpft ausgegeben werden.

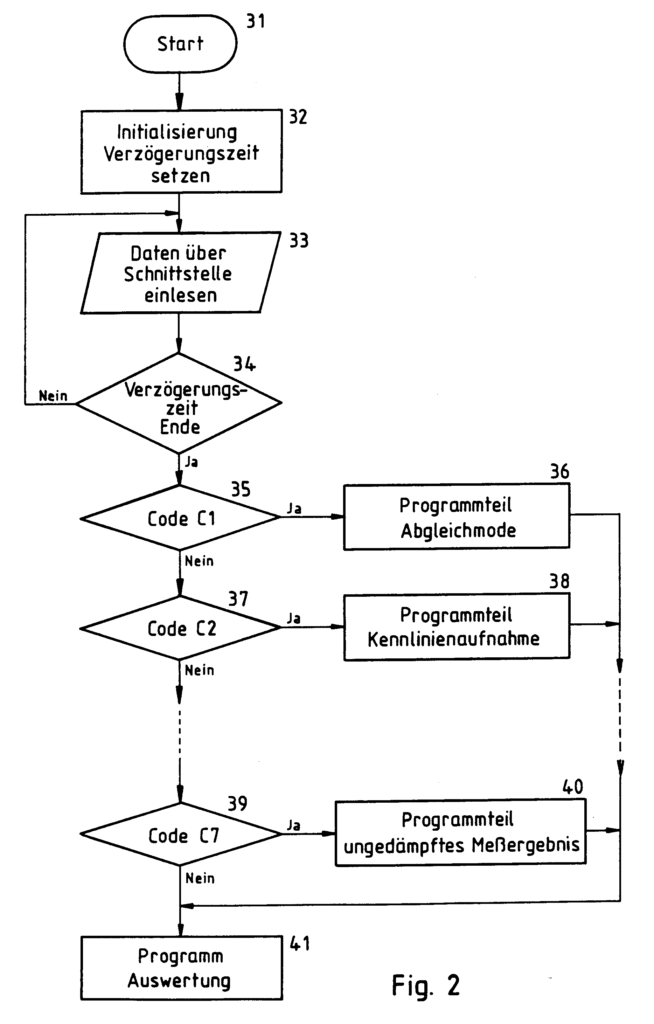

Fig. 2 zeigt schematisch ein Programm des Mikrocomputers 3. Nach einem Start bei 31 wird in einem Programmteil 32 zunächst eine Initialisierung vorgenommen und eine Verzögerungszeit gesetzt. Danach wird der Eingang RDI im Programmteil 33 abgefragt. Dieses erfolgt über eine Verzweigung 34 in einer Programmschleife solange, bis die bei 32 gesetzte Verzögerungszeit abgelaufen ist. Danach erfolgt bei 35 eine Verzweigung des Programms in Abhängigkeit davon, ob bei 33 der Code C1 eingelesen wurde. Ist dieses der Fall, wird der Programmteil "Abgleichmode" durchlaufen. Ist ein Code C1 nicht eingelesen worden, wird in der Verzweigung 37 geprüft, ob ein Code C2 eingelesen wurde. Zutreffendenfalls wird ein Programmteil 38 zur Kennlinienaufnahme durchlaufen.

In ähnlicher Weise wird geprüft, ob einer der Codes C3 bis C6 eingelesen wurde, was der Übersichtlichkeit halber in Fig. 2 nicht dargestellt ist. Schließlich ist eine Verzweigung 39 in Abhängigkeit vom Vorhandensein des Codes C7 vorgesehen, die zur Aktivierung des Programmteils 40 zur ungedämpften Ausgabe des Meßergebnisses dient. Danach wird das eigentliche Meßprogramm 41 durchlaufen, bis der Füllstandsgeber abgeschaltet wird.

## Patentansprüche

1. Anordnung zur Messung einer Flüssigkeitsmenge und zum Abgleich und/oder Test eines Füllstandsgebers, insbesondere in einem Kraftstofftank eines Kraftfahrzeuges, mit einem Füllstandsgeber, der eine Sonde und eine Auswerteschaltung aufweist, wobei die Auswerteschaltung einen Mikrocomputer enthält, welcher einen Dateneingang aufweist und zur Ausführung verschiedener Betriebsarten programmiert ist, wobei die Umschaltung der Betriebsart durch einen entsprechenden Code erfolgt, dadurch gekennzeichnet, daß ein Anschluß (S2) der Auswerteschaltung (1) sowohl mit dem Dateneingang (RDI) als auch mit einem Datenausgang (TDO) des Mikrocomputers (3) verbunden ist, und daß die Anordnung eine externe Abgleich- und/oder Testvorrichtung (15) zum Abgleich und/oder Test des Füllstandsgebers aufweist, die mit dem Anschluß (S2) der Auswerteschaltung (1) verbunden ist und die diesem Anschluß den entsprechenden Code zur Aktivierung einer der Betriebsarten zuführt.

2. Anordnung nach Anspruch 1, dadurch gekennzeichnet, daß ein Code zur Durchführung des Abgleichs vorgesehen ist, bei welchem ein Meßergebnis bei einem vorgegebenen Füllstand, vorzugsweise bei leerem Tank, mit einem Sollwert verglichen wird und ein Korrekturwert in einem nichtflüchtigen Speicher (EEPROM) des Mikrocomputers (3) abgelegt wird.

3. Anordnung nach Anspruch 2, dadurch gekennzeichnet, daß ein Code zur Ausgabe des Korrekturwertes über einen Datenausgang (TDO) des Mikrocomputers (3) vorgesehen ist.

4. Anordnung nach einem der vorhergehenden Ansprüche, wobei in einem nichtflüchtigen Speicher des Mikrocomputers eine Kennlinie abgelegt ist, welche den Zusammenhang zwischen der Flüssigkeitsmenge und dem Sondensignal für jeweils eine Sonde und/oder eine Tankform wiedergibt, und ein Code zum Eingeben und Speichern einer anderen Kennlinie vorgesehen ist.

5. Anordnung nach einem der vorhergehenden Ansprüche, dadurch gekennzeichnet, daß ein Code zur Ausgabe eines Meßergebnisses bei einem vorgegebenen Sondensignal vorgesehen ist.

6. Anordnung nach einem der vorhergehenden Ansprüche, dadurch gekennzeichnet, daß in dem Mikrocomputer (3) ein Fehlerdiagnoseregister vorgesehen ist, in welches Fehlermeldungen während des Betriebs der Anordnung eingeschrieben werden, und daß ein Code zur Ausgabe des Inhalts des Fehlerdiagnoseregisters zuführbar ist.

7. Anordnung nach einem der vorhergehenden Ansprüche, wobei Ausgänge zur Ausgabe des Meßergebnisses als digitales Signal und als Analogsignal vorgesehen sind, und ein Code eingebbar ist, der die Ausgabe des Meßergebnisses für den vollen Tank unabhängig von der tatsächlichen Flüssigkeitsmenge bewirkt.

8. Anordnung nach einem der vorhergehenden Ansprüche, wobei die Berechnung des Meßergebnisses eine Dämpfung der durch Schwappen der Flüssigkeit bedingten Änderungen der Sondenspannung umfaßt, und ein Code vorgesehen ist, der eine ungedämpfte Ausgabe der Meßergebnisse bewirkt.

9. Anordnung nach Anspruch 1, dadurch gekennzeichnet, daß vom Mikrocomputer (3) der Dateneingang (RDI) nur innerhalb einer vorgegebenen Zeit nach dem Einschalten abgefragt wird.

10. Anordnung nach Anspruch 1, dadurch gekennzeichnet, daß zwischen dem Datenausgang (TDO) des Mikrocomputers (3) und dem Anschluß (S2) der Auswerteschaltung (1) ein Transistor (9) geschaltet ist und daß der Anschluß (S2) mit dem Dateneingang (RDI) des Mikrocomputers (3) über einen Spannungsteiler (11, 12) verbunden ist.

11. Anordnung nach Anspruch 1, dadurch gekennzeichnet, daß die Abgleich- und/oder Testeinrichtung (15) einen weiteren Mikrocomputer (16) mit einer Anzeigevorrichtung (21), einer Codeeingabevorrichtung (22) und einem bidirektionalen Treiber (17) aufweist.

## Claims

1. Arrangement for measuring a liquid quantity and for calibration and/or testing of a level indicator, particularly in a fuel tank of a motor vehicle, with a level indicator which has a probe and an evaluation circuit, in which the evaluation circuit includes a micro computer which has a data input and is programmed for carrying out different operating modes, the change over of operating mode being effected by an appropriate code, characterised in that a connection (S2) of the evaluation circuit (1) is connected both with the data input (RDI) and with a data output (TDO) of the micro computer (3) and that the arrangement has an external calibration and/or testing device (15) for calibrating and/or testing the level indicator which is connected with the connection (S2) of the evaluation circuit (1) and feeds to this connection the appropriate code for activating one of the operating modes.

2. Arrangement according to claim 1, characterised in that a code is provided for performing the calibration in which a measurement result for a predetermined level, preferably an empty tank, is compared with a desired value, and a correction value is entered in a non-volatile memory (EEPROM) of the micro computer (3).

3. Arrangement according to claim 2, characterised in that a code is provided to output the correction value via a data output (TDO) of the micro computer (3).

4. Arrangement according to one of the preceding claims, wherein a reference characteristic is entered in a non-volatile memory of the micro computer which reproduces the correlation between the liquid quantity and the probe signal for a particular probe and/or tank shape, and a code is provided for inputting and storing another reference characteristic.

5. Arrangement according to one of the preceding claims, characterised in that a code is provided to output a measurement result for a predetermined probe signal.

6. Arrangement according to one of the preceding claims, characterized in that an error diagnosis register is provided in the micro computer (3) in which error messages are written during operation of the arrangement, and that a code can be fed in for the contents of the error diagnosis register to be put out.

7. Arrangement according to one of the preceding claims, wherein outputs are provided for putting out the measurement result as a digital signal and as an analogue signal, and a code can be input which causes a measurement result to be put out as for a full tank regardless of the actual liquid quantity.

8. Arrangement according to one of the preceding claims, wherein calculation of the measurement result includes for damping of the variations in the probe voltage caused by the liquid swilling about, and a code is provided which causes a measurement result to be put out that is not damped.

9. Arrangement according to claim 1, characterised in that the data input (RDI) is interrogated by the micro computer (3) only within a predetermined period after switch-on.

10. Arrangement according to claim 1, characterised in that a transistor (9) is in circuit between the data output (TDO) of the micro computer (3) and the connection (S2) of the evaluation circuit (1), and that the connection (S2) is connected with the data input (RDI) of the micro computer (3) via a voltage divider (11, 12).

11. Arrangement according to claim 1, characterised in that the calibration and/or testing device (15) has a further micro computer (16) with an indicator device (21), a code input device (22) and a bi-directional driver unit (17).

## Revendications

1. Dispositif de mesure de la quantité d'un liquide et d'ajustement et/ou de contrôle d'un indicateur de remplissage, notamment du remplissage du réservoir de carburant d'une automobile, dispositif comportant un indicateur de remplissage qui comprend une sonde et un circuit de traitement de données, ce circuit contenant un microordinateur qui présente une entrée de données et qui est programmé de façon à exécuter des programmes d'action différents, la commutation du mode d'action étant provoquée par un code correspondant, ce dispositif étant caractérisé en ce qu'une borne (S2) du circuit (1) de traitement de données est connectée à la fois à l'entrée de données (RDI) et à la sortie de données (TDO) du microordinateur (3) et en ce qu'il comporte un circuit extérieur (15) d'ajustement et/ou de contrôle,qui est destiné à ajuster et/ou contrôler l'indicateur de remplissage, qui est connecté à la borne (S2) du circuit (1) de traitement de données et délivre à cette borne le code respectif, destiné à activer l'un des modes d'action.

2. Dispositif selon la revendication 1, caractérisé en ce qu'il est prévu un code destiné à faire exécuter l'ajustement au cours duquel la valeur d'une mesure à un état ou % de remplissage prédéterminé, avantageusement lorsque le réservoir est vide, est comparée à une valeur de consigne et une valeur corrective est disposée dans une mémoire (EEPROM) non volatile du microordinateur (3).

3. Dispositif selon la revendication 2, caractérisé en ce qu'il est prévu un code destiné à délivrer la valeur corrective sur une sortie de données (TDO) du microordinateur (3).

4. Dispositif selon l'une des revendications précédentes, dans lequel il est déposé dans une mémoire non volatile du microordinateur une caractéristique qui représente le rapport entre la quantité de liquide et le signal de la sonde pour une sonde donnée et/ou pour un réservoir de forme donnée, et il est prévu un code destiné à faire entrer et à mémoriser une courbe ou donnée caractéristique.

5. Dispositif selon l'une des revendications précédentes, caractérisé en ce qu'il est prévu un code destiné à délivrer le résultat d'une mesure pour un signal prédéterminé de la sonde.

6. Dispositif selon l'une des revendications précédentes, dans lequel le microordinateur (3) contient un enregistreur de diagnostics d'incidents, dans lequel sont inscrits les avis d'incidents survenus pendant le fonctionnement du dispositif et en ce qu'on peut faire émettre un code destiné à délivrer le contenu de cet enregistreur.

7. Dispositif selon l'une des revendications précédentes, dans lequel des sorties respectives sont destinées à délivrer le résultat des mesures sous la forme de signaux numériques et de signaux analogiques, et il peut être entré un code qui provoque la délivrance du résultat de la mesure pour un réservoir plein, quelle que soit la quantité réelle de liquide.

8. Dispositif selon l'une des revendications précédentes, dans lequel le calcul du résultat des mesures inclut un amortissement des variations de la tension de la sonde dues au clapotement du liquide, et il est prévu un code qui provoque la délivrance de résultats non amortis.

9. Dispositif selon la revendication 1, caractérisé en ce que le microordinateur (3) n'interroge l'entrée de données (RDI) que pendant un intervalle de temps prédéterminé après son branchement.

10. Dispositif selon la revendication 1, caractérisé en ce qu'un transistor (9) est intercalé entre la sortie de données (TDO) du microordinateur (3) et la borne (S2) du circuit (1) de traitement de données, et en ce que cette borne (S2) est reliée, par l'entremise d'un diviseur de tension (11, 12), à l'entrée de données (RDI) de ce microordinateur (3).

11. Dispositif selon la revendication 1, caractérisé en ce que le circuit (15) d'ajustement et/ou de contrôle comporte un autre microordinateur (16) à dispositif d'affichage (21), un dispositif (22) d'entrée de codes et un amplificateur bidirectionnel (17).
